(19) Europäisches Patentamt / European Patent Office / Office européen des brevets

(11) **EP 2 453 267 A1**

(12) **EUROPEAN PATENT APPLICATION**

(43) Date of publication:
**16.05.2012 Bulletin 2012/20**

(51) Int Cl.:
*G02B 5/18* (2006.01)  *G02B 13/14* (2006.01)

(21) Application number: **11188579.4**

(22) Date of filing: **10.11.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.11.2010 JP 2010251622**

(71) Applicant: **Kabushiki Kaisha Topcon
Tokyo 174-8580 (JP)**

(72) Inventors:
• **Tanami, Yasunori
  Tokyo 174-8580 (JP)**
• **Nakamura, Hitoshi
  Tokyo 174-8580 (JP)**
• **Tsubaki, Koji
  Tokyo 174-8580 (JP)**

(74) Representative: **D'Halleweyn, Nele Veerle Trees
Gertrudis et al
Arnold & Siedsma
Sweelinckplein 1
2517 GK The Hague (NL)**

(54) **Infrared optical system**

(57)    An infrared optical system, which can obtain excellent image even when used under a severe condition, is easily and cheaply produced by molding. The infrared optical system, which is used within the wavelength region of the near infrared of 1~2μ m, the middle infrared of 3~5μm and the far infrared of 8~12μm, is provided with a configuration of 2 groups 2 lenses having the first lens L1 and the second lens L2 sequentially from the object side, the first lens is a convex aspheric lens of which convex surface protrudes toward the object side, and the second lens is a convex meniscus lens of which convex surface protrudes toward the object side, the image side surface of the first lens L1 is set to be a five-ring zone diffraction optical element (DOE) surface, and, the infrared optical system is formed by using chalcogenide glass such that the extreme values of the surface shape of the first lens L1 and the second lens L2 are not formed at the lens surface including the outer portion of the lens effective diameter.

FIG.1

12.50 MM

**Description**

**Cross Reference to Related Application(s)**

This application claims the benefit of Japanese Patent Application 2010-251622 filed on November 10, 2010, in the Japanese Patent Office, the entire disclosure of which is incorporated herein by reference for all purposes.

Technical field

The present invention relates to an infrared optical system used within the wavelength region from near infrared to far infrared.

Background

With reference to the above-described infrared optical system, an infrared lens system with 2 groups 2 lenses and 3 groups 3 lenses formed by Zinc Sulfide (ZnS) has been published(Patent document 1, Fig.51, Fig.65, Fig.79, Fig. 93and Fig.96,).

Related technical reference

Patent document

[Patent document 1] With reference to Japanese patent publication 2007-241032 which is incorporated herein by reference.

**SUMMARY**

Regarding the infrared optical system described in the above patent document 1, since the extreme value of the curved surface forming the surface shape of the lens is formed within the range except for the center of the lens and the perimeter of the lens, the range of the eccentric error is narrow and the infrared optical system cannot be made without extremely precise grinding processing. Due to this reason, the eccentric of lens may easily occur, therefore spherical aberration, distortion, chromatic aberration, or the like may occur. Thus, there is a problem that it is hard for the existing infrared lens used for the infrared imaging system which is used within a wavelength region of the middle infrared of $3\sim5\mu$m and the far infrared of $8\sim12\mu$m to be used for the particular optical system exposed in the severe environment.

Also, in the case where there is an extreme value in the outer portion of the lens effective diameter which is a loop shape (ring shape) ranging about several millimeters from the lens effective diameter to the lens edge, the deformation of the lens glass material may remain in the interior of the lens while molding, thus the lens characteristic of the lens effective diameter may be influenced according to the various environment in which the lens is used.

Also, it is necessary to perform precise grinding processing as described above to the above-mentioned existing infrared lens, thus there is a problem that the production cost thereof may increase. It is desired that the infrared lens is produced with low cost.

Besides, it is necessary that the infrared camera used for the infrared imaging system be compactly contained in the chassis such as a lens barrel or the like, thus the length of the entire optical system should be decreased, and in order to widen the range of clearly imaging, it is necessary to extend the focus as well as to brighten the optical system.

Therefore, the purpose of the invention, as for an infrared optical system used for the infrared imaging system, is to easily and cheaply produce the infrared optical system which can obtain good image even when used under a severe condition. Also, the purpose of the invention is to provide an infrared optical system, which can be compactly accommodated in the chassis such as a lens barrel by decreasing the length of the entire optical system, and the range of clearly imaging of which can be widened by extending the focus and brightening the optical system.

**BRIEF DESCRIPTION OF THE FIGURES**

FIG. 1 is a schematic diagram illustrating the configuration of an infrared optical system according to a mode for carrying out the present invention.
FIG. 2 illustrates aberration of the infrared optical system according to the first embodiment of the present invention, wherein (a) is a graph illustrating spherical aberration, (b) is a graph illustrating astigmatism and (c) is a graph illustrating distortion.

FIG. 3 is a graph illustrating frequency characteristic of the infrared optical system according to the first embodiment.

FIG. 4 is a graph illustrating through-focus characteristic of the infrared optical system according to the first embodiment.

FIG. 5 is a graph illustrating the variation of MTF with the environmental temperature of the infrared optical system according to the first embodiment.

FIG. 6 is a schematic diagram illustrating the configuration of an infrared optical system according to the second embodiment.

FIG. 7 illustrates aberration of the infrared optical system according to the second embodiment, wherein (a) is a graph illustrating spherical aberration, (b) is a graph illustrating astigmatism and (c) is a graph illustrating distortion.

Description of the reference number in the drawing:

10: infrared optical system
11: aperture stop
12: imaging element
13: detector window
L1: the first lens
L2: the second lens
20: infrared optical system

## DETAILED DESCRIPTION

The present invention of claim 1 relates to an infrared optical system, it is characterized in that, the configuration of 2 groups 2 lenses having the first lens and the second lens which are provided sequentially from the object side, the first lens is a convex aspheric lens of which the convex surface protrudes toward the object side, and the second lens is a convex meniscus lens of which the convex surface protrudes toward the object side, the object side surface or the image side surface of at least one lens is made to be a diffraction optical element surface, and the extreme value is not formed at the lens surface including the outer portion of the lens effective diameter. Preferably the two groups of lenses can be adjusted independently. Preferably the total number of the lenses in the two groups is two.

The present invention of claim 2 relates to an infrared optical system, it is characterized in that, the configuration of 2 groups 2 lenses having the first lens and the second lens which are provided sequentially from the object side, the first lens is a convex aspheric lens of which the convex surface protrudes toward the object side, and the second lens is a convex meniscus lens of which the convex surface protrudes toward the object side, the object side surface or the image side surface of at least one lens is made to be a diffraction optical element surface, the focal length of the entire system is denoted by f, the focal length of the first lens L1 is denoted by f1, and the condition below is satisfied,

$$2.0 < f1/f.$$

The present invention of claim 3 relates to an infrared optical system, it is characterized in that, the configuration of 2 groups 2 lenses has the first lens and the second lens which are provided sequentially from the object side, the first lens is a convex aspheric lens of which the convex surface protrudes toward the object side, and the second lens is a convex meniscus lens of which the convex surface protrudes toward the object side, the object side surface or the image side surface of at least one lens is made to be a diffraction optical element surface, and the aperture ratio of F/0.95 is provided.

The present invention of claim 4 has the characteristic that the first lens and the second lens of the infrared optical system of any one of claim 1 to claim 3 are made of the chalcogenide glass.

The present invention of claim 5 has the characteristic that the image forming element is provided in the infrared optical system of any one of claim 1 to claim 4.

According to the present invention, as for the infrared optical system used in the wavelength region of the near infrared of 1~2 $\mu$m, the middle infrared of 3~5$\mu$m and the far infrared of 8~12$\mu$m, it is possible to easily and cheaply produce an infrared optical system which can obtain excellent image even when used under a severe environment, through molding. Also, the infrared optical system may be compactly accommodated in the chassis such as a lens barrel by decreasing the length of the entire optical system. Also, it is possible to widen the range of clearly imaging by extending the focal length and brightening the optical system.

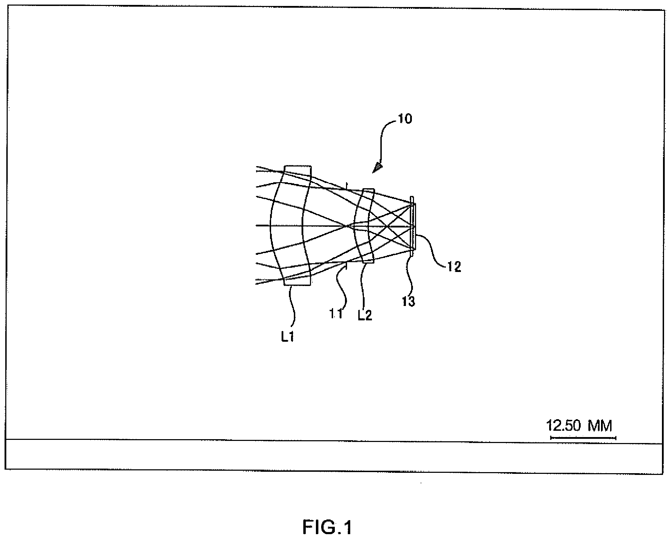

The infrared optical system according to the mode for carrying out the invention will be described below. FIG. 1 is a schematic diagram illustrating the configuration of an infrared optical system according to a mode for carrying out the present invention. The infrared optical system 10 according to the mode for carrying out the invention is provided with the lens configuration of 2 groups 2 lenses including the first lens L1 and the second lens L2 sequentially from the object side. Further, as for the infrared optical system 10, in addition to the aperture stop 11 being provided between the first lens L1 and the second lens L2, the imaging element 12 is provided at the image circle.

The first lens L1 is a convex meniscus lens of which the convex surface protrudes toward the object side, and can be used in the infrared optical system which is used within the wavelength region of the near infrared of $1{\sim}2\mu m$, the middle infrared of $3{\sim}5\mu m$ and the far infrared of $8{\sim}12\mu m$. The first lens L1 is formed of a glass material, which is the chalcogenide glass with a refractive index of about 2.6, through molding. Also, the first lens L1 may be configured by forming its object side surface (the first surface) into an aspheric surface and forming its image side surface (the second surface) into a diffraction optical element (DOE) surface. Also, the first lens L1 is configured such that extreme values of the surface shape of the first surface and the second surface of the first lens L1 are not formed in the inner portion of lens effective diameter or the outer portion of the lens effective diameter. Since the light ray irradiated at the center of lens is perpendicular to the lens surface, there is no astigmatism for the light ray passing through the center of lens, thus the center of lens is an extreme value which needs not to be considered. That is, the extreme value is a maximum value or a minimum value which does not include the center of lens. Here, the chalcogenide glass (sulfide glass) is a glass of which the main component is sulfur, selenium and tellurium. Since the chalcogenide glass has a characteristic of high transmission for the infrared, it becomes a raw material usually used as infrared transparent material. Also, in addition to the molding, it may also be shaped by cutting the chalcogenide glass. As the provision about the measuring method of the effective diameter in JIS B7095, the lens effective diameter is referred as the diameter of the parallel light beam which is emitted from the infinite object point on the optical axis and passes through the lens. The outer portion of the lens effective diameter is referred as the range of the loop shape (ring shape) of about several millimeters from the effective diameter to the lens edge.

Also, the second lens L2 is a convex meniscus lens of which convex surface protrudes toward the object side. The second lens L2 is formed of a glass material, which is the above-mentioned chalcogenide glass, through molding. Also, the second lens L2, of which the object side surface (the third surface) is formed into an aspheric surface, is configured such that the extreme values of the surface shape of the object side surface (the third surface) and the image side surface (the fourth surface) of the second lens L2 are not formed in the inner portion of the lens effective diameter or the outer potion of the lens effective diameter, in the outer potion of the lens effective diameter, either at the lens effective diameter, that is, the extreme values are not formed on the lens surface.

As the infrared optical system 10 according to the present invention, the extreme values of the curved surfaces forming surface shape of all the lenses are neither formed in the inner portion or the outer portion of the lens effective diameter, nor formed at the lens effective diameter, that is, the extreme values are not formed on lens surfaces.

Next, in the infrared optical system 10 according to the present mode for carrying out the invention, the surface of at least one of the first lens L1 and the second lens L2 is configured as the diffraction optical element (DOE) surface.

Here, as to respective lens L1, L2 of the infrared optical system 10 according to the embodiment, when the removal of eccentricity of the lens (the centration) is performed, the eccentricity state may be determined by imaging for lens of which the edge does not experience cutting processing using the imaging element CCD, alternatively, the eccentricity state may be determined by irradiating the lens surface using a laser from a laser interferometer. Through the removal processing of eccentricity (the centration) as described above, the extreme value of the surface shape of the lens may not be formed in the inner portion of the lens effective diameter.

The imaging element 12 can photograph within the wavelength region of the near infrared of $1{\sim}2\mu m$, the middle infrared of $3{\sim}5\mu m$ and the far infrared of $8{\sim}12\mu m$. For example, the imaging element 12 may be a CCD imaging element and may be provided with a detector window 13 through which the near infrared, the middle infrared and the far infrared can pass.

The embodiment of the infrared optical system 10 will be described below. The infrared optical system 10 according to the first embodiment is provided with the configuration as illustrated in FIG. 1. Also, the infrared optical system 10 satisfies the condition below, wherein f denotes the focal length of the entire system, and f1 denotes the focal length of the first lens L1.

$$2.0 \leqslant f1/f \cdots condition$$

Also, as to the infrared optical system 10, the F number is set to be 0.95, the focus f is set to be 19.7mm, and the wavelength range is set to be $7\mu m{\sim}14\mu m$ (central wavelength is $9.3\mu m$) though the wavelength range is a wavelength region of the near infrared of 1~2μm, the middle infrared of 3~5μm and the far infrared of 8~12μm. Here, setting the wavelength to be 7μm~14μm is to widen the common wavelength range of far infrared of 8~12μm so as to make the imaging within the wide range of the far infrared wavelength region possible.

Also, as to the infrared optical system 10 according to the first embodiment, the visual angle is set to be 20.3° at horizontal visual field X 15.3° at perpendicular visual field, 25.2 ° at diagonal visual field, the horizontal visual field standard is set to be f=19.7mm, the back focal length is set to be at least more than 3.5mm, preferred more than 8.0mm, such that a optical element such as the filter can be accommodated in. As to the infrared optical system 10, if the accepted light amount ratio of the center of rectangular light-accepted element is set to be 100%, the periphery light amount ratio (i.e., the light amount ratio outside the center) of which is set to be at least more than 80%, preferred more than 83% at diagonal visual field, such that the infrared optical system can be brightened. The MTF (modulation transfer function) is set to be at least more than 0.60, preferred more than 0.70 at optical axis, and the MTF is set to be at least more than 0.50, preferred more than 0.61 at horizontal visual field, such that the small object from far away can be seen clearly (wherein, the spatial frequency is 20lp/mm, R/T average).

Also, the distortion of the infrared optical system 10 is set to be within ± 3% at diagonal visual field, but is about -1.06% in the case of practical designing. Also, the infrared optical system 10 has optimum optical characteristic when the environmental temperature is between -40 °C and +85 °C .

Also, the first surface of the first lens L1 is an aspheric surface, the aspheric coefficient of which is set to be 16 times at the most. Also, the second surface of the first lens L1 is set to be five-ring zone DOE (diffraction optical element) surface.

Here, the germanium which is usually used for forming the lens is crystallized material of rare metal and is very expensive. Also, the shape is processed through grinding and cutting in the prior art. Since the chalcogenide glass is a glass of which the main component is germanium (the amount of which is smaller than the above-mentioned one), antimony, selenium and so on, it is cheaper compared with the above mentioned crystallized material, and it may be shaped by the molding.

Also, the imaging element 12 is an element of which the size is 7.04mm in the horizontal direction, 5.28mm in the vertical direction, the length of the diagonal is 8.8mm, and the resolution is 320 X 240 (QVGA).

The detailed lens data of first lens L1 is described below.

f = 19.70 mm, aperture ratio F/0.95, visual angle 2 ω = 25 ° , focusing distance 1 m~∞

$$f1 = 41.78 \text{ mm}$$

$$2 \quad < f1 / f = 2.12$$

$$0.3 < BF / f = 0.41$$

Wherein the BF denotes back focus.

| surface number | Curvature radius [mm] | interval [mm] | glass material |
|---|---|---|---|
| 1 | 17.08 | 6.30 | chalcogenide glass |
| 2 | 17.52 | 9.95 | |
| 3 | 12.90 | 2.70 | chalcogenide glass |

| name | wavelength | 7 μm | 8 μm | 10 μm | 12 μm | 14 μm |
|---|---|---|---|---|---|---|
| chalcogenide glass | refractive index | 2.6092 | 2.6068 | 2.6010 | 2.5938 | 2.5847 |

The aspheric surface equation is defined by the following equation, and the aspheric coefficient of each surface with surface number 1, 2, 3, 4 is illustrated below.

[equation 1]

$$Z = \frac{h^2}{R \times \left\{ 1 + \sqrt{1 - (1+K) \times (\frac{h}{R})^2} \right\}}$$

$$+ A_4 \times h^4 + A_6 \times h^6 + A_8 \times h^8 + A_{10} \times h^{10} + A_{12} \times h^{12} + A_{14} \times h^{14} + A_{16} \times h^{16}$$

Wherein, R denotes curvature radius; h denotes the distance from the light axis to the lens surface; Z denotes sag amount, which is the distance from the plane, which is perpendicular to the light axis and includes the intersection point of lens surface and the light axis, to the lens surface with respect to the distance h based on the plane.

Also, the second surface of the first lens L1 is formed as the DOE (diffraction optical element) surface, wherein the definition of DOE surface is represented by the function of the optical path difference Ψ. The DOE (diffraction optical element) surface is formed by being cut into the shape of concentric circles with steps. The cutting amount with respect to the surface of the basal plate is represented by the following equation of cutting amount. Since the DOE surface become five-ring zone, the coefficient of optical path difference function is described as al ～ a5 below.

Optical path difference function

[Equation 2]

$$\Psi(h) = (a_1 \times h^2 + a_2 \times h^4 + a_3 \times h^6 + a_4 \times h^8 + a_5 \times h^{10})$$

The cutting amount with respect to the surface of the basal plate

[equation 3]

$$dZ(h) = \frac{1}{n-1} MOD[\psi(h), \lambda]$$

The aspheric coefficient of each surface of the infrared optical system 10 and the calculation for the DOE is illustrated as below.

| Surface number 1 | |
| --- | --- |
| number | value |
| K | -0.39283 |
| A4 | -1.46985×10$^{-5}$ |
| A6 | -7.44257×10$^{-8}$ |
| A8 | -3_99728×10$^{-9}$ |
| A10 | 4.42781×10$^{-11}$ |
| A12 | -5.35900×10$^{-13}$ |
| A14 | 3.24691×10$^{-15}$ |
| A16 | -9.41910×10$^{-18}$ |

| Surface number 2 | |
| --- | --- |
| number | value |
| K | -5.76364 |
| A4 | 7.75565×10$^{-5}$ |
| A6 | -1.49645×10$^{-6}$ |

(continued)

| Surface number 2 | |
| --- | --- |
| number | value |
| A8 | $-2.00327\times10^{-9}$ |
| A10 | $4.49796\times10^{-11}$ |
| A12 | $3.97166\times10^{-15}$ |
| A14 | $-6.22371\times10^{-16}$ |
| A16 | 0 |

| Surface number 2 (DOE (diffraction optical element) surface coefficient) | |
| --- | --- |
| number | value |
| a1 | $-5.1315\times10^{-4}$ |
| a2 | $-2.1562\times10^{-6}$ |
| a3 | $4.7796\times10^{-8}$ |
| a4 | $-2.5526\times10^{-10}$ |
| a5 | $2.8359\times10^{-13}$ |

| Surface number 3 | |
| --- | --- |
| number | value |
| K | 0 |
| A4 | $5.83897\times10^{-5}$ |
| A6 | $-1.62459\times10^{-6}$ |
| A8 | $7.21362\times10^{-8}$ |
| A10 | $-5.10774\times10^{-9}$ |
| A12 | $9.13285\times10^{-11}$ |
| A14 | $-7.64069\times10^{-13}$ |
| A16 | $-1.62890\times10^{-15}$ |

| Surface number 4 | |
| --- | --- |
| number | value |
| K | -1.02069 |
| A4 | $1.95002\times10^{-4}$ |
| A6 | $-2.14604\times10^{-6}$ |
| A8 | $2.80001\times10^{-8}$ |
| A10 | $-5.83949\times10^{-9}$ |
| A12 | $6.78996\times10^{-11}$ |
| A14 | 0 |
| A16 | 0 |

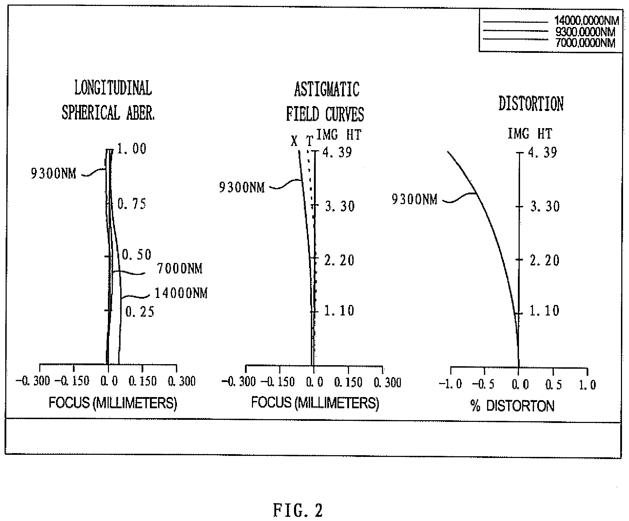

Next, the characteristic of infrared optical system 10 according to the first embodiment will be described as follows. FIG. 2 is a graph illustrating spherical aberration (with a unit of mm), astigmatism (with a unit of mm) and distortion (with a unit of %) of the infrared optical system according to the first embodiment. As illustrated in FIG. 2, the spherical aberration and astigmatism is controlled to about 0. As known from the distortion graph, the distortion is controlled to within 1.0%.

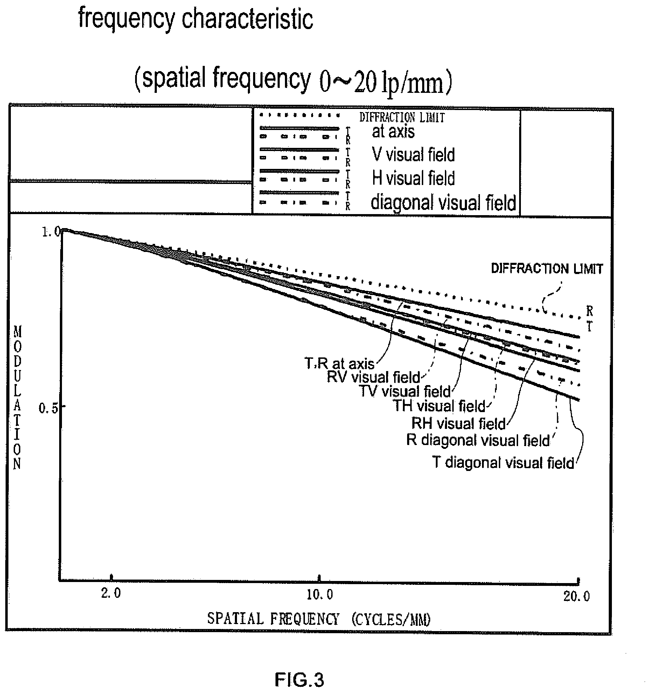

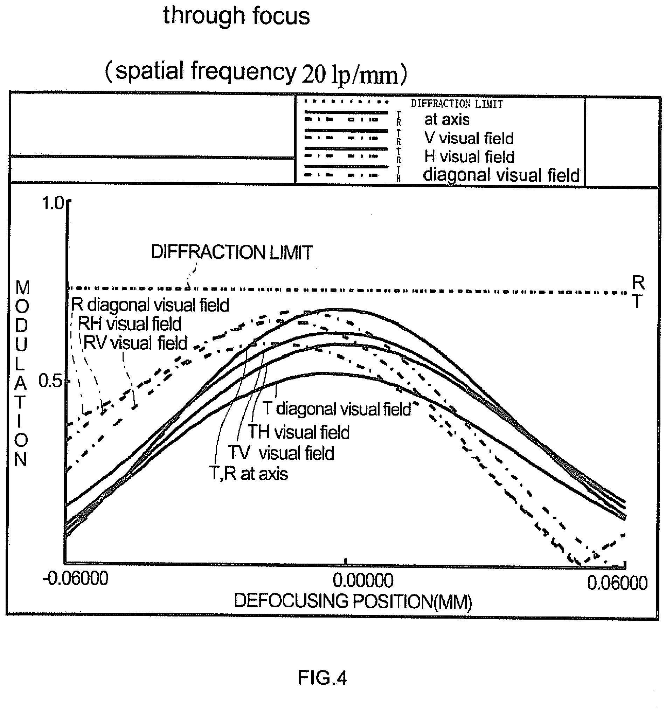

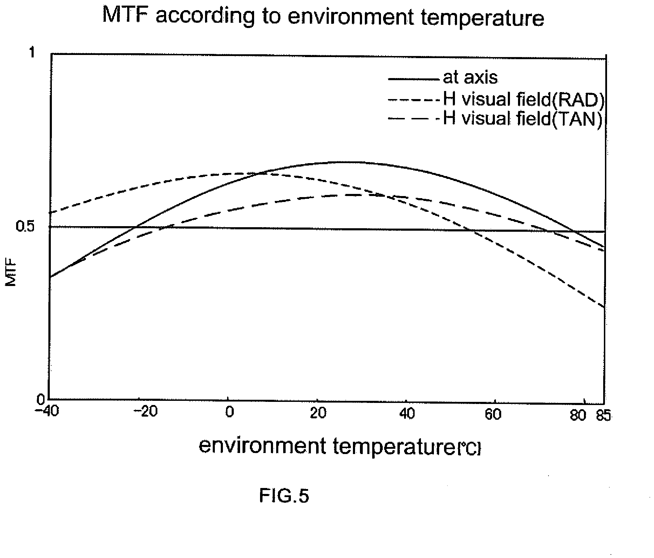

Also, FIG. 3 is a graph illustrating frequency characteristic of the infrared optical system 10 according to the first embodiment. FIG. 4 is a graph illustrating through-focus characteristic of the infrared optical system 10 according to the first embodiment. As known from the graph, the entire range of the infrared optical system 10 according to an embodiment is below diffraction limit value. In addition, FIG. 5 is a graph illustrating the variation of MTF with the environmental temperature. As known from the graph, the infrared optical system 10 according to an embodiment has good optical characteristic between -40 °C and +85 °C .

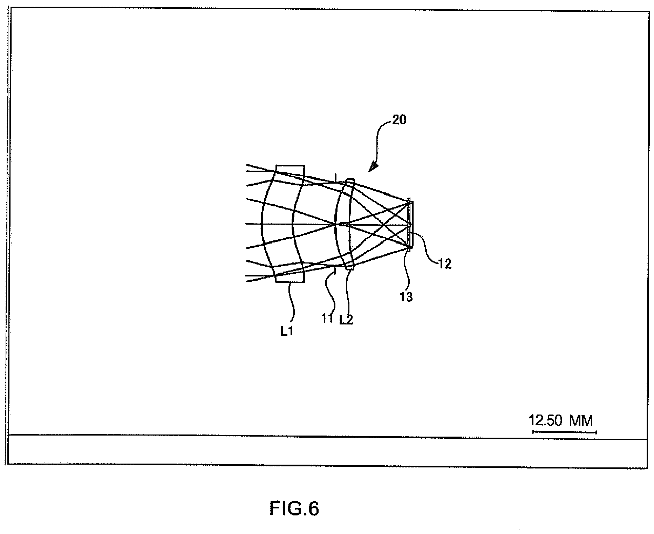

Next, the second embodiment will be described. FIG. 6 is a schematic diagram illustrating the configuration of an infrared optical system according to the second embodiment. In addition to the image side surface of the second lens L2 being formed as DOE, the infrared optical system 20 has the same configuration as the first embodiment.

As to infrared optical system 20 according to the second embodiment, the F number is set to be 0.95, the horizontal visual field standard is set to be f=19.40mm, the visual angle is set to be $2 \omega = 26°$ , the focal length of the first lens L1 is set to be f1 = 120.66 mm. And the numerical aperture NA is set to be 2.5-2.6. Now the following expression is satisfied:

$$2 < f1/f = 6.22$$

$$0.3 < BF/f = 0.60$$

Also, the first lens L1 and the second lens L2 are produced by molding chalcogenide glass. And, the aperture stop 11, the imaging element 12 and the detector window 13 has the same configuration as the first embodiment.

The lens data is illustrated as below

| surface number | Curvature radius [mm] | interval [mm] | glass material |
|---|---|---|---|
| 1 | 16.5593 | 6.1956 | chalcogenide glass |
| 2 | 13.9367 | 8.3723 | |
| 3 | 21.0956 | 2.8044 | chalcogenide glass |
| 4 | 91.3894 | —— | |

| name | wavelength | 7 μ m | 8 μ m | 10 μ m | 12 μ m | 14 μ m |
|---|---|---|---|---|---|---|
| chalcogenide glass | refractive index | 2.6092 | 2.6068 | 2.6010 | 2.5938 | 2.5847 |

Also, the aspherical equation Z, the coefficient of the optical path difference function, the optical path difference function $\Psi$ of DOE formed at the image side surface of the second lens L2 (surface number 3) and the cutting amount with respect to the basal plate surface dZ(h) use the same definition as the first embodiment and is illustrated below together with the respective coefficient of surfaces with the surface number 1, 2, 3, 4. Here, the image side surface of the second lens L2 (the fourth surface), i.e., DOE (diffraction optical element) surface is formed by being cut to the shape of concentric circles with steps.

Aspheric surface coefficient
Surface number 1
| number | value |
|---|---|
| K | -0.31552 |
| A4 | $-1.90441 \times 10^{-5}$ |
| A6 | $-1.35428 \times 10^{-7}$ |
| A8 | $-4.64337 \times 10^{-9}$ |
| A10 | $4.99537 \times 10^{-11}$ |
| A12 | $-5.57900 \times 10^{-13}$ |
| A14 | $2.36475 \times 10^{-15}$ |
| A16 | $-2.45975 \times 10^{-18}$ |

| Surface number 2 | |
|---|---|
| number | value |
| K | -4.28573 |
| A4 | $1.40585 \times 10^{-4}$ |
| A6 | $-1.90934 \times 10^{-6}$ |
| A8 | $-8.82931 \times 10^{-9}$ |
| A10 | $7.19014 \times 10^{-11}$ |
| A12 | $6.19163 \times 10^{-13}$ |
| A14 | $-4.12287 \times 10^{-15}$ |
| A16 | 0 |

| Surface number 3 | |
|---|---|
| number | value |
| K | 0 |
| A4 | $1.11929 \times 10^{-4}$ |
| A6 | $2.78881 \times 10^{-7}$ |
| A8 | $-5.56371 \times 10^{-8}$ |
| A10 | $3.37190 \times 10^{-9}$ |
| A12 | $-7.95450 \times 10^{-11}$ |
| A14 | $8.38234 \times 10^{-13}$ |
| A16 | $-3.63517 \times 10^{-15}$ |

| Surface number 3 ( DOE ( diffraction optical element ) surface coefficient ) | |
|---|---|
| number | value |
| a1 | $-8.1796 \times 10^{-4}$ |
| a2 | $-2.0683 \times 10^{-7}$ |
| a3 | $8.9259 \times 10^{-8}$ |
| a4 | $-1.5891 \times 10^{-9}$ |
| a5 | $6.7516 \times 10^{-12}$ |

| Surface number 4 | |
|---|---|
| number | value |
| K | -0.65559 |
| A4 | $1.84181 \times 10^{-4}$ |
| A6 | $-3.22248 \times 10^{-6}$ |
| A8 | $1.56657 \times 10^{-7}$ |
| A10 | $-2.52275 \times 10^{-9}$ |
| A12 | $1.04247 \times 10^{-11}$ |
| A14 | 0 |
| A16 | 0 |

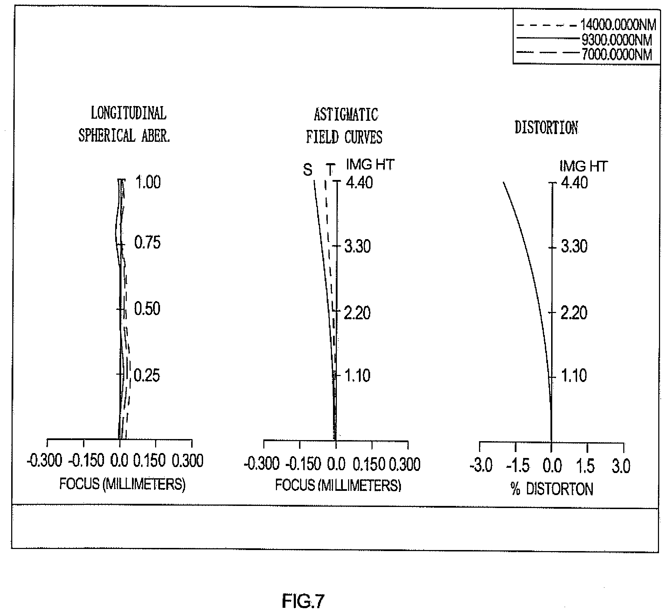

Next, the characteristic of infrared optical system 20 according to the second embodiment will be described below. FIG. 7 is a graph illustrating spherical aberration (with a unit of mm), astigmatism (with a unit of mm) and distortion (with a unit of %) of the infrared optical system 20 according to embodiment 2. As illustrated in FIG. 7, the spherical aberration and astigmatism is controlled to about 0. As known from the distortion graph that the distortion is controlled to within 1.0%.

As described above, the infrared optical system according to the present embodiment can be produced, processed and cut by using the cheaply purchased chalcogenide glass which can make the molding, of which production and procession is easy, possible. Also, the extreme value is not formed at the lens surface including the outer portion of the lens effective diameter.

**Claims**

1. An infrared optical system, comprising:

   two groups two lenses including a first lens and a second lens which are provided sequentially from an object side, wherein
   the first lens is a convex aspheric lens of which a convex surface protrudes toward the object side, and
   the second lens is a convex meniscus lens of which a convex surface protrudes toward the object side,
   an object side surface or an image side surface of at least one lens is made to be a diffraction optical element surface, and
   an extreme value of the curved surfaces forming surface shape of all the lenses is not formed at the lens surface including the outer portion of the lens effective diameter.

2. The infrared optical system of claim 1, wherein a focal length of the entire system is denoted by f, a focal length of the first lens L1 is denoted by f1 and the condition of 2.0 < f1/f is satisfied.

3. The infrared optical system of claim 1 or 2, wherein the aperture ratio of F/0.95 is provided.

4. An infrared optical system, comprising:

   two groups two lenses including a first lens and a second lens which are provided sequentially from an object side,
   the first lens is a convex aspheric lens of which a convex surface protrudes toward the object side, and
   the second lens is a convex meniscus lens of which a convex surface protrudes toward the object side,
   an object side surface or an image side surface of at least one lens is made to be a diffraction optical element surface,
   a focal length of the entire system is denoted by f, a focal length of the first lens L1 is denoted by f1 and the condition 2.0 < f1/f is satisfied.

5. An infrared optical system, comprising:

   two groups two lenses including a first lens and a second lens which are provided sequentially from an object side,
   the first lens is a convex aspheric lens of which a convex surface protrudes toward the object side, and
   the second lens is a convex meniscus lens of which a convex surface protrudes toward the object side,
   an object side surface or an image side surface of at least one lens is made to be a diffraction optical element surface, and
   an aperture ratio of F/0.95 is provided.

6. The infrared optical system of any of the previous claims, wherein the first lens and the second lens are formed of a chalcogenide glass.

7. The infrared optical system of any of the previous claims, wherein the infrared optical system is provided with an image forming element.

8. The infrared optical system of any of the previous claims, wherein a wavelength range of the infrared optical system is set to be $7\mu m \sim 14\mu m$.

9. The infrared optical system of any of the previous claims, wherein a visual angle is set to be 20.3° at horizontal visual field X 15.3° at perpendicular visual field, 25.2° at diagonal visual field, a horizontal visual field standard is set to be f=19.7mm, and a back focal length is set to be at least more than 3.5mm.

**10.** The infrared optical system of any of the previous claims, wherein a periphery light amount of which is set to be at least more than 80% at perpendicular visual field.

**11.** The infrared optical system of any of the previous claims, wherein, in the case of 20 lp/mm, a modulation transfer function (MTF) is set to be at least more than 0.60 at an optical axis, and at least more than 0.50 at a horizontal visual field.

**12.** The infrared optical system of any of the previous claims, a distortion is within 1.0%.

**13.** An infrared optical system, comprising:

two independently adjustable lenses including a first lens and a second lens which are provided sequentially from an object side,
wherein
the first lens is a convex aspheric lens of which a convex surface protrudes toward the object side, and
the second lens is a convex meniscus lens of which a convex surface protrudes toward the object side,
an object side surface or an image side surface of at least one lens is made to be a diffraction optical element surface, and
an extreme value of the curved surfaces forming surface shape of all the lenses is not formed at the lens surface including the outer portion of the lens effective diameter.

**14.** An infrared optical system, comprising:

two lenses including a first lens and a second lens which are provided sequentially from an object side,
wherein
the first lens is a convex aspheric lens of which a convex surface protrudes toward the object side, and
the second lens is a convex meniscus lens of which a convex surface protrudes toward the object side,
an object side surface or an image side surface of at least one lens is made to be a diffraction optical element surface, and
an extreme value of the curved surfaces forming surface shape of all the lenses is not formed at the lens surface including the outer portion of the lens effective diameter.

**15.** An infrared optical system, comprising:

two lenses including a first lens and a second lens which are provided sequentially from an object side,
the first lens is a convex aspheric lens of which a convex surface protrudes toward the object side, and
the second lens is a convex meniscus lens of which a convex surface protrudes toward the object side,
an object side surface or an image side surface of at least one lens is made to be a diffraction optical element surface,
a focal length of the entire system is denoted by f, a focal length of the first lens L1 is denoted by f1 and the condition $2.0 < f1/f$ is satisfied.

FIG.1

FIG. 2

# frequency characteristic

## (spatial frequency 0~20 lp/mm)

FIG.3

# through focus

# (spatial frequency 20 lp/mm)

FIG.4

## MTF according to environment temperature

FIG.5

FIG.6

FIG.7

Europäisches
Patentamt

European
Patent Office

Office européen
des brevets

# EUROPEAN SEARCH REPORT

Application Number

EP 11 18 8579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 196 42 121 A1 (ZEISS CARL FA [DE]) 16 April 1998 (1998-04-16) * the whole document * ----- | 1-15 | INV. G02B5/18 G02B13/14 |
| X | EP 0 461 856 A1 (BRITISH AEROSPACE [GB]) 18 December 1991 (1991-12-18) * the whole document * ----- | 1-15 | |
| X | US 5 973 827 A (CHIPPER ROBERT B [US]) 26 October 1999 (1999-10-26) * abstract * * figures 4, 8 * ----- | 1-5, 13-15 | |
| X | JP 2003 295052 A (FUJI PHOTO OPTICAL CO LTD) 15 October 2003 (2003-10-15) * abstract; figures 1,2 * ----- | 1-5, 13-15 | |
| A | US 2009/052018 A1 (BAKER ALLIE M [US]) 26 February 2009 (2009-02-26) * abstract; figures 2,10 * * examples * ----- | 1-15 | |

| | | | TECHNICAL FIELDS SEARCHED (IPC) |
|---|---|---|---|
| | | | G02B |

The present search report has been drawn up for all claims

| Place of search | Date of completion of the search | Examiner |
|---|---|---|
| Munich | 3 April 2012 | Windecker, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 18 8579

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2012

| Patent document cited in search report | | Publication date | Patent family member(s) | | Publication date |
|---|---|---|---|---|---|
| DE 19642121 | A1 | 16-04-1998 | DE 19642121 A1<br>EP 0840155 A2<br>US 5978132 A | | 16-04-1998<br>06-05-1998<br>02-11-1999 |
| EP 0461856 | A1 | 18-12-1991 | EP 0461856 A1<br>GB 2246876 A | | 18-12-1991<br>12-02-1992 |
| US 5973827 | A | 26-10-1999 | NONE | | |
| JP 2003295052 | A | 15-10-2003 | NONE | | |
| US 2009052018 | A1 | 26-02-2009 | AU 2008311392 A1<br>CA 2696775 A1<br>GB 2465324 A<br>US 2009052018 A1<br>US 2010165455 A1<br>WO 2009048495 A1 | | 16-04-2009<br>16-04-2009<br>19-05-2010<br>26-02-2009<br>01-07-2010<br>16-04-2009 |

For more details about this annex : see Official Journal of the European Patent Office, No. 12/82

**EP 2 453 267 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010251622 A
- JP 2007241032 A